# EUROPEAN PATENT APPLICATION

(11) **EP 4 672 847 A1**
(43) Date of publication of application: **31.12.2025**
(21) Application number: 23923991.6
(22) Date of filing: 21.02.2023
(51) Int. Cl.: H04W 74/08

(54) **TERMINAL, WIRELESS COMMUNICATION METHOD, AND BASE STATION**

(71) Applicant: NTT DOCOMO, INC., Tokyo 100-6150 (JP)
(72) Inventor: OKUMURA, Mamoru, Tokyo 100-6150 (JP); MATSUMURA, Yuki, Tokyo 100-6150 (JP); HARADA, Hiroki, Tokyo 100-6150 (JP); WANG, Jing, Beijing 100190 (CN)
(74) Representative: Hoffmann Eitle
(86) International application number: PCT/JP2023/006191
(87) International publication number: WO 2024/176337

(57) **Abstract**

A terminal according to one aspect of the present disclosure includes a receiving section that receives a first downlink control channel (PDCCH) order, a transmitting section that transmits a random access channel (PRACH), based on the first PDCCH order, and a control section that controls, when a random access procedure without monitoring of a response signal (RAR) of the PRACH is configured, at least one of determination of a success or a failure of the PRACH and retransmission of the PRACH, based on whether or not a second PDCCH order or transmission confirmation information is received in certain duration.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

It is assumed that, in future radio communication systems (for example, radio communication systems of later than Rel. 16/5G), communication is controlled based on inter-cell mobility with a plurality of cells including a non-serving cell or inter-cell mobility using a plurality of transmission/reception points (for example, a multi-TRP (MTRP)). In inter-cell mobility, it is also assumed that candidate cells are configured separately from a serving cell, and the serving cell and the candidate cells are switched.

However, when inter-cell mobility (for example, switching between the serving cell and the candidate cells or the like) is applied, how to perform control on UL transmission (as an example, control on timing advance and the like) presents a problem. For example, as a timing advance acquisition method, it is assumed to support a random access procedure without a random access response (RAR); however, how to perform the random access procedure has not been fully studied. Unless timing advance can be appropriately acquired, inter-cell mobility cannot be appropriately performed, and quality of communication may degrade.

The present disclosure has been made in view of this respect, and has an object to provide a terminal, a radio communication method, and a base station that enable appropriate control on communication even when inter-cell mobility is performed. Solution to Problem

A terminal according to one aspect of the present disclosure includes a receiving section that receives a first downlink control channel (PDCCH) order, a transmitting section that transmits a random access channel (PRACH), based on the first PDCCH order, and a control section that controls, when a random access procedure without monitoring of a response signal (RAR) of the PRACH is configured, at least one of determination of a success or a failure of the PRACH and retransmission of the PRACH, based on whether or not a second PDCCH order or transmission confirmation information is received in certain duration. Advantageous Effects of Invention

According to one aspect of the present disclosure, communication can be appropriately controlled even when inter-cell mobility is performed.

### Brief Description of Drawings

[FIG. 1] FIG. 1A is a diagram to show an example of movement of a UE in Rel. 17. FIG. 1B is a diagram to show an example of movement of the UE in Rel. 18.
[FIG. 2] FIG. 2 is a diagram to show an example of an association between serving cells and candidate cells.
[FIG. 3] FIG. 3A is a diagram to show a second example of option 2 for a candidate cell configuration. FIG. 3B is a diagram to show a third example of option 2 for a candidate cell configuration.
[FIG. 4] FIG. 4 is a diagram to show serving cell switch example 1.
[FIG. 5] FIG. 5 is a diagram to show serving cell switch example 2.
[FIG. 6] FIG. 6 is a diagram to show serving cell switch example 3.
[FIG. 7] FIG. 7 is a diagram to show an example of timing advance groups (TAGs) to which cells included in a cell group belong.
[FIG. 8] FIG. 8 is a diagram to show an example of a MAC CE for timing advance command.
[FIG. 9] FIG. 9 is a diagram to show an example of a configuration of TAGs when association of TAG IDs with candidate cells is supported.
[FIG. 10] FIG. 10 is a diagram to show an overview of L1L2-triggered mobility (LTM).
[FIG. 11] FIG. 11 is a diagram to show a PDCCH indicated RACH (PDCCH ordered RACH) with random access response (RAR) monitoring for the serving cell.
[FIG. 12] FIG. 12 is a diagram to show a PDCCH indicated RACH (PDCCH ordered RACH) without random access response (RAR) monitoring for candidate cells.
[FIG. 13] FIG. 13 is a diagram to show DCI format 1_0 CRC-scrambled with a C-RNTI.
[FIG. 14] FIG. 14 is a diagram to show an example of a RACH procedure without RAR monitoring according to a first embodiment.
[FIG. 15] FIG. 15A and FIG. 15B are diagrams to show other examples of the RACH procedure without RAR monitoring according to the first embodiment.
[FIG. 16] FIG. 16 is a diagram to show another example of the RACH procedure without RAR monitoring according to the first embodiment.
[FIG. 17] FIG. 17 is a diagram to show an example of a DCI format used for an ACK of PRACH transmission without RAR monitoring according to the first embodiment.
[FIG. 18] FIG. 18 is a diagram to show an example of the RACH procedure without RAR monitoring according to a second embodiment.
[FIG. 19] FIG. 19 is a diagram to show another example of the RACH procedure without RAR monitoring according to the second embodiment.
[FIG. 20] FIG. 20 is a diagram to show an example of the RACH procedure without RAR monitoring according to a fourth embodiment.
[FIG. 21] FIG. 21 is a diagram to show another example of the RACH procedure without RAR monitoring according to the fourth embodiment.
[FIG. 22] FIG. 22 is a diagram to show an example of a schematic structure of a radio communication system according to one embodiment.
[FIG. 23] FIG. 23 is a diagram to show an example of a structure of a base station according to one embodiment.
[FIG. 24] FIG. 24 is a diagram to show an example of a structure of a user terminal according to one embodiment.
[FIG. 25] FIG. 25 is a diagram to show an example of a hardware structure of the base station and the user terminal according to one embodiment.
[FIG. 26] FIG. 26 is a diagram to show an example of a vehicle according to one embodiment.

### Description of Embodiments

### (TCI, Spatial Relation, QCL)

For NR, control of reception processing (for example, at least one of reception, de-mapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may mean that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between the plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (L1/L2 Inter-Cell Mobility)

As described above, it is studied that the UE performs UL transmission to one or a plurality of cells/TRPs. As a procedure of this case, the following scenario 1 or scenario 2 is considered. Note that, in the present disclosure, a serving cell may be interpreted as a TRP in the serving cell. Layer 1/layer 2 (L1/L2) and DCI/Medium Access Control Control Element (MAC CE) may be interchangeably interpreted. In the present disclosure, a physical cell ID (Physical Cell Identity (PCI)) different from the PCI of the current serving cell may be simply referred to as a "different PCI". A non-serving cell, a cell having a different PCI, and an additional cell may be interchangeably interpreted.

### <Scenario 1>

Scenario 1 corresponds to inter-cell mobility of the multi-TRP, for example; however, it may be a scenario not corresponding to inter-cell mobility of the multi-TRP.
(1) The UE receives, from the serving cell, a configuration of an SSB for beam measurement of a TRP corresponding to a different PCI from the serving cell and a configuration necessary for using radio resources for data transmission and reception, including resources of the different PCI.
(2) The UE performs beam measurement of the TRP corresponding to the different PCI, and reports beam measurement results to the serving cell.
(3) Based on the above report, the transmission configuration indication (TCI) state associated with the TRP corresponding to the different PCI is activated by L1/L2 signaling from the serving cell.
(4) The UE performs transmission and reception by using a UE-dedicated channel on the TRP corresponding to the different PCI.
(5) The UE needs to invariably cover the serving cell, including a case of the multi-TRP. Similarly to a conventional system, the UE needs to use a common channel (a broadcast control channel (BCCH), a paging channel (PCH)) and the like from the serving cell.

In scenario 1, when the UE transmits and receives an additional cell/TRP (a TRP corresponding to a PCI of the additional cell) and a signal, the serving cell (assumption of the serving cell in the UE) is not changed. The UE is configured with a higher layer parameter related to the PCI of the non-serving cell from the serving cell. Scenario 1 may be applied in Rel. 17, for example.

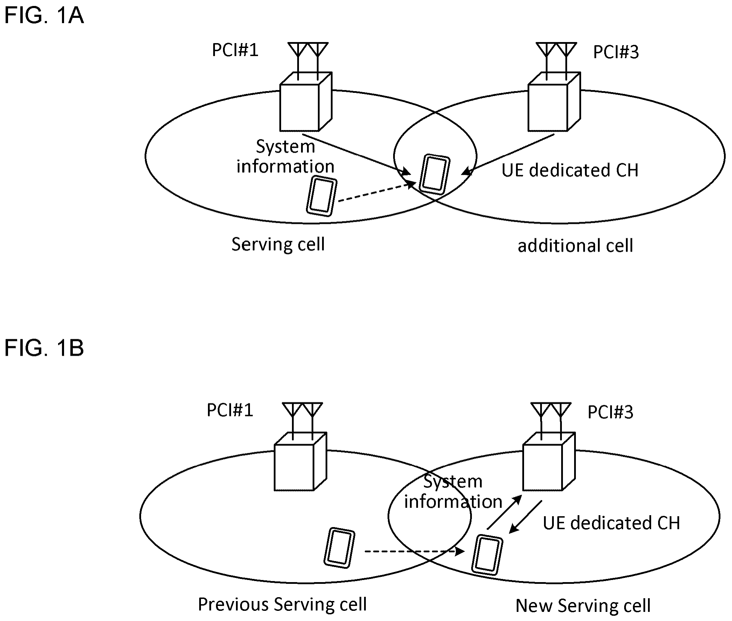

FIG. 1A is a diagram to show an example of movement of the UE in Rel. 17. It is assumed that the UE moves from a cell (serving cell) of PCI #1 to a cell (additional cell) (overlapping the serving cell) of PCI #3. In this case, in Rel. 17, the serving cell is not switched by L1/L2. The additional cell is a cell having an additional PCI different from the PCI of the serving cell. The UE can receive/transmit a UE-dedicated channel from the additional cell. The UE needs to be present within coverage of the serving cell in order to receive a UE common channel (for example, system information/paging/short message).

### <Scenario 2>

In scenario 2, L1/L2 inter-cell mobility is applied. In L1/L2 inter-cell mobility, the serving cell can be changed by using a function such as beam control without performing RRC reconfiguration. In other words, transmission and reception to and from an additional cell can be performed without performing handover. For handover, RRC reconnection is required, which generates a period in which data communication cannot be performed, and thus by applying L1/L2 inter-cell mobility that does not require handover, data communication can be continued even at the time of the serving cell change. Scenario 2 may be applied to Rel. 18, for example. In scenario 2, for example, the following procedure is performed.
(1) The UE receives, from the serving cell, a configuration of an SSB for a cell (additional cell) having a different PCI for beam measurement/serving cell change.
(2) The UE performs beam measurement of the cell using the different PCI, and reports measurement results to the serving cell.
(3) The UE may receive a configuration (serving cell configuration) of the cell having the different PCI by higher layer signaling (for example, RRC). In other words, a pre-configuration related to serving cell change may be performed. The configuration may be performed together with or may be performed separately from the configuration in (1).
(4) Based on the above report, the TCI state of the cell having the different PCI may be activated by L1/L2 signaling according to the serving cell change. The TCI state activation and the serving cell change may be separately performed.
(5) The UE changes the serving cell (assumption of the serving cell), and starts reception/transmission by using a pre-configured UE-dedicated channel and the TCI state.

In other words, in scenario 2, the serving cell (assumption of the serving cell in the UE) is updated by L1/L2 signaling. Scenario 2 may be applied in Rel. 18.

FIG. 1B is a diagram to show an example of movement of the UE in Rel. 18. In Rel. 18, the serving cell is switched by L1/L2. The UE can receive/transmit a UE-dedicated channel/common channel from/to a new serving cell. The UE may go out of the coverage of the previous serving cell.

### (Configuration of Plurality of Candidate Cells)

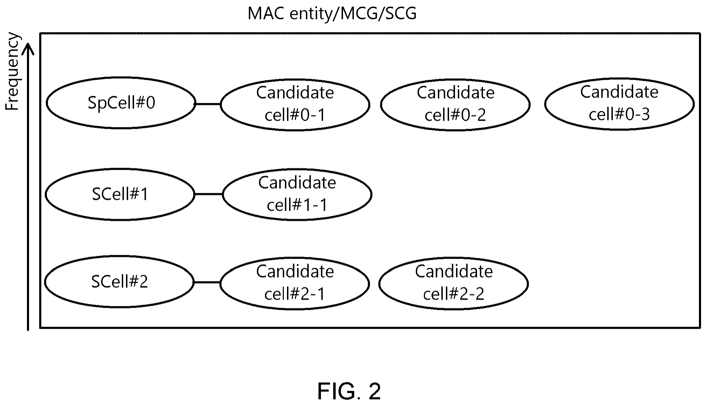

FIG. 2 is a diagram to show an example of an association between serving cells and candidate cells. SpCell #0, SCell #1, or SCell #2 is a serving cell. Note that the SpCell means a special cell (including a primary cell (PCell) and a primary secondary cell (PSCell)). The SCell means a secondary cell. SpCell #0 is associated with candidate cell #0-1, candidate cell #0-2, and candidate cell #0-3. SCell #1 is associated with candidate cell #1-1. SCell #2 is associated with candidate cells #2-1 and 2-2. In this manner, one or more candidate cells (candidate serving cells) may be associated with the serving cell.

Regarding a configuration of a cell to become a candidate (candidate cell) when the serving cell is changed, for example, the following options 1 and 2 are considered.

### <Option 1>

As in inter-cell mobility of Rel. 17, information in ServingCellConfig may include information related to a plurality of candidate cells. In this case, the plurality of candidate cells need to share the same configuration such as the PDCCH/PDSCH/UL as the serving cell.

For example, in inter-cell mobility of Rel. 17, "mimoParam-r17" is added and PCI configuration information is added under ServingCellConfig. mimoParam-r17 may include additionalPCI-ToAddModList-r17 being an information list of additional SSBs having PCIs different from the PCI of the serving cell. The same configuration, except for a part of information, as that of the serving cell may be applied to the candidate cells (additional cells, cells having additionalPCI).

### <Option 2>

A complete configuration (for example, ServingCellConfig) corresponding to each cell may be applied to a plurality of candidate cells, and the plurality of candidate cells may be associated with each serving cell by reusing a carrier aggregation (CA) configuration framework. In other words, the candidate cells may not share configuration information with the serving cells, and another configuration may be applied thereto. The UE is provided with a complete configuration of each candidate cell, and can thus perform appropriate communication with the candidate cells.

In the CA configuration framework, an SpCell can be configured for each cell group, and a plurality of SCells can be added. By reusing the CA framework, the serving cell may be configured for each cell group for L1/L2 inter-cell mobility, and a plurality of candidate cells may be configured. The candidate cells may be activated/deactivated by a MAC CE. The candidate cells may be activated/deactivated by TCI information corresponding to the candidate cells being activated/deactivated by a MAC CE. The method is considered to be beneficial for reducing complexity of UE operation.

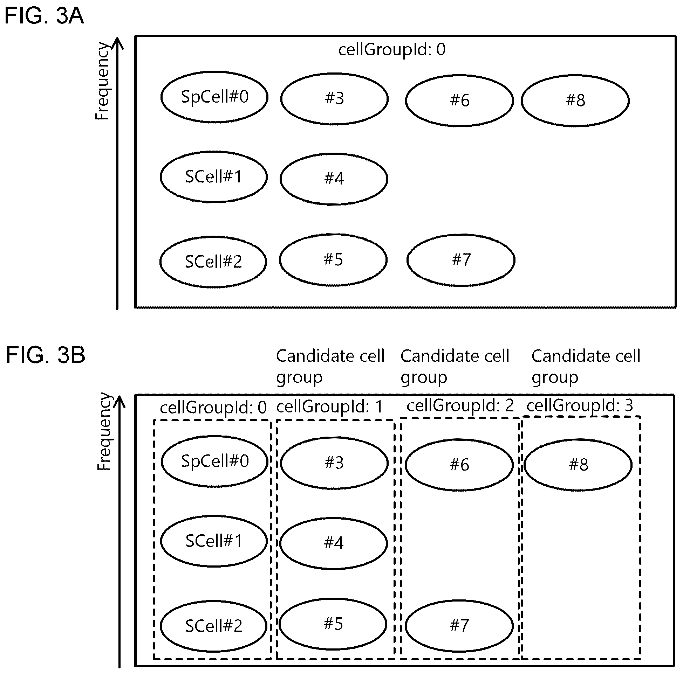

FIG. 3A is a diagram to show a first example of option 2 for a candidate cell configuration. In the example of FIG. 3A, a common candidate cell pool for cell switch in the MCG/SCG is applied to the candidate cells. In other words, the candidate cells are regarded as one pool (group), regardless of a frequency band.

FIG. 3B is a diagram to show a second example of option 2 for a candidate cell configuration. In the example of FIG. 3B, a plurality of cell groups are configured, and cell group switch can be performed by using L1/L2 signaling. The candidate cells are configured for each cell group, and a configuration of each group includes corresponding SpCell and SCell indices.

### (Signaling for Serving Cell Change Indication)

Implicit or explicit signaling for a serving cell change indication will be described.

### {Aspect 1}

In aspect 1, implicit signaling for a serving cell change indication will be described.

### {{Option 1-1}}

When a specific control resource set (CORESET) (for example, at least one of CORESET #0, a CORESET of CH5 Type0-CSS, and a CORESET of CH6/CH7/CH8 CSS) is indicated (activated) by a MAC CE together with one or more TCI states associated with a cell having a PCI different from the PCI of the serving cell (when one or more TCI states associated with a cell having a PCI different from the PCI of the serving cell are indicated/activated for a specific CORESET by a MAC CE), the UE may determine to change the serving cell to another cell (cell x, the cell having the different PCI). In other words, the activation may implicitly indicate change of the serving cell to another cell.

In this case, the UE may update a beam of another CORESET ID, another CORESET using CH6/CH7/CH8, or another CORESET using a CSS to the same TCI state(s) as the activated TCI state(s).

### {{Option 1-2}}

When a MAC CE activates/deactivates TCI states of the PDSCH, and all of the TCI states activated by the MAC CE are associated with the same cell x having a PCI different from the PCI of the serving cell, the UE may determine to change the serving cell to another cell (cell x). In other words, the association may implicitly indicate change of the serving cell to another cell.

In a case in which the option is applied, when a NW (base station) does not change the serving cell, and the MAC CE activates the TCI states of the PDSCH associated with the cell having the different PCI, TCI states related to another cell (for example, the current serving cell or a cell having a second different PCI) need to be included as well.

### {{Option 1-3}}

When a MAC CE activates/deactivates unified TCI states (for example, corresponding to a unified TCI framework of Rel. 17), and all of the activated unified TCI states are associated with the same cell x having a different PCI, the UE may determine to change the serving cell to another cell (cell x). In other words, the association may implicitly indicate change of the serving cell to another cell.

### {Aspect 2}

In aspect 2, explicit signaling for a serving cell change indication will be described. In aspect 2, for example, scenario 2 described above is applied.

### {{Option 2-1}}

An example of the serving cell change indication will be described below. Note that activation/deactivation of the non-serving cell, change of the serving cell, and transmission/reception of another cell (non-serving cell) having a physical cell ID different from the physical cell ID of the serving cell may be interchangeably interpreted.

The UE may receive a new MAC CE including at least one of fields (pieces of information) shown in (1) to (3) below corresponding to the non-serving cell, which is used for activation/deactivation of the non-serving cell. When the UE receives the MAC CE, the UE may determine to change the serving cell to another cell (non-serving cell). The UE may control transmission and reception of a DL signal/UL signal to and from the non-serving cell, based on the piece(s) of information. Note that there may be one or a plurality of non-serving cells. In the example shown below, a MAC CE including a plurality of fields indicating a plurality of non-serving cell indices is applied.
(1) Serving cell ID.
(2) BWP ID.
(3) Non-serving cell ID used for activation. The non-serving cell ID may be replaced with any piece of information corresponding to the non-serving cell (with which the non-serving cell can be identified).

As an example of (3), for example, one of (3-1) to (3-5) may be applied.
(3-1) PCI (PCI to be used directly). For example, 10 bits are used.
(3-2) Recreated index (new ID) of the non-serving cell. The new ID may be associated with a part of PCIs, and may be configured only for the serving cell and the non-serving cell used by (available to) the UE. The new ID can have a reduced number of bits in comparison to the PCI.
(3-3) CSI report configuration ID (CSI-ReportConfigId) (when CSI-ReportConfig corresponds to one or a plurality of non-serving cells).
(3-4) CSI resource configuration ID (CSI-ResourceConfigId) (when CSI-ResourceConfigId corresponds to one or a plurality of non-serving cells).
(3-5) Bitmap indicating activation/deactivation of each non-serving cell. The size (the number of bits) of the bitmap may be the same as the number of non-serving cells configured in the CC. For example, when a second non-serving cell out of three non-serving cells is activated, "010" is configured.

At least one of the pieces of information included in the MAC CE may be included in DCI. Alternatively, at least one of the serving cells activated by the MAC CE may be indicated by DCI. The MAC CE/DCI may include a field for indicating a TCI state/SSB/CSI-RS from a cell having a different PCI so that the UE can recognize a monitored DL beam in a target cell (changed serving cell). The UE may create and transmit a beam report (CSI report) by using the TCI state/SSB/CSI-RS.

### {{Option 2-2}}

The UE may receive a MAC CE, in which a new 1-bit field "C" is added to an existing MAC CE. The field indicates whether to perform serving cell change. The UE may receive the MAC CE and determine whether to change the serving cell to another cell, based on the field.

### {{Option 2-3}}

Regarding the MAC CE in option 2-2, a field indicating a serving cell index/PCI/another ID (the new ID of option 2-1 described above or the like) and a field of a TCI state/SSB/CSI-RS of a target cell (changed serving cell) may further be included in the MAC CE.

In this manner, the indication for the serving cell change indication is indicated by a MAC CE/DCI, and therefore the UE can appropriately perform serving cell change.

### {Serving Cell Switch Example 1}

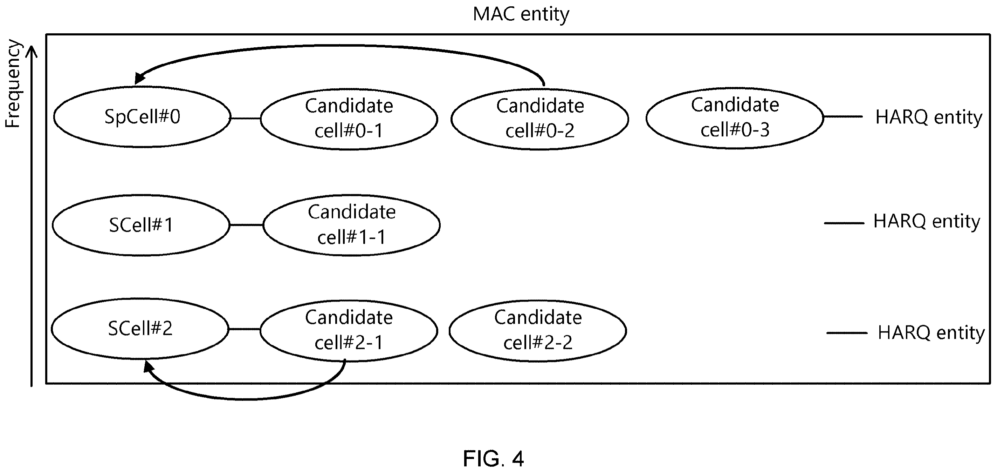

FIG. 4 is a diagram to show serving cell switch example 1. For example, when change of the serving cell to candidate cell #0-2 is indicated by L1/L2 signaling in serving cell SpCell #0 of the MCG/SCG, candidate cell #0-2 becomes new serving cell SpCell #0. For example, when change of the serving cell to candidate cell #2-1 is indicated by L1/L2 signaling in serving cell SCell #2 of the MCG/SCG, candidate cell #2-1 becomes new serving cell SCell #2.

### {Serving Cell Switch Example 2}

RRC/MAC CE can configure global candidate cell IDs (cells #0, ..., 5) for each cell group, band, FR, and UE. The UE may be indicated with serving cell switch by the global candidate cell IDs.

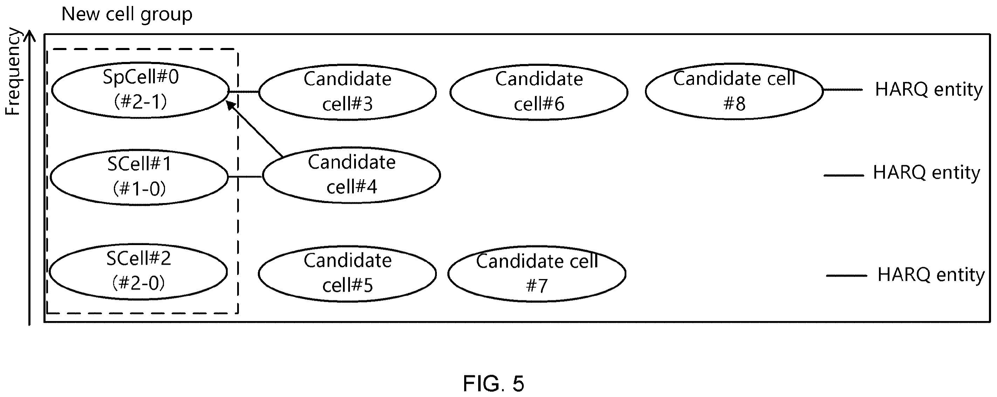

FIG. 5 is a diagram to show serving cell switch example 2. Similarly to FIG. 3A, a pool of a plurality of candidate cells may be configured, and the serving cell can be switched to any (activated) candidate cell in the pool by L1/L2 signaling. In this case, the configured candidate cells may become either the SpCells or the SCells, based on L1/L2 signaling.

The UE may receive an indication of serving cell change (from cell #2-1 to candidate cell 4) by a MAC CE/DCI. The indicated candidate cell #4 becomes the new SpCell of the cell group.

### {Serving Cell Switch Example 3}

RRC/MAC CE can configure global candidate cell IDs (cells #0-1, #0-1, ..., 2-2) for each cell group, band, FR, and UE. The UE may be indicated with serving cell switch by the global candidate cell IDs.

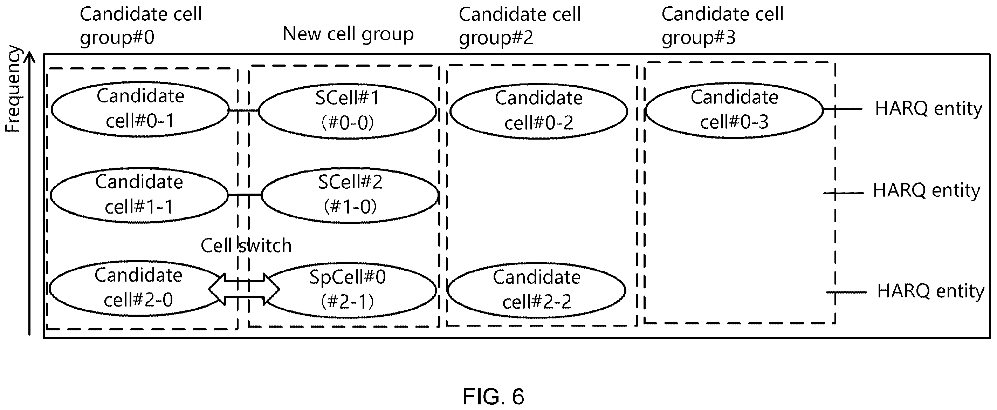

FIG. 6 is a diagram to show serving cell switch example 3. The UE receives an indication of serving cell change (from cell #2-0 to cell #2-1) by a MAC CE/DCI. The indicated cell #2-1 becomes the new SpCell of the cell group. Cells (cell #0-0 and cell #1-0) of the same cell group as the indicated cell #2-1 become Scell #1 and Scell #2. In other words, the serving cell group is switched.

### (Timing Advance Group)

When a plurality of TRPs are used, there are some cases where the distance between a UE and each TRP is different. The plurality of TRPs may be included in the same cell (for example, a serving cell). Alternatively, among the plurality of TRPs, a certain TRP corresponds to the serving cell, while the other TRP(s) may correspond to a non-serving cell(s). In this case, it is also assumed that the distance between each TRP and the UE is different.

In existing systems, transmission timing of a UL (Uplink) channel and/or a UL signal (UL channel/signal) is adjusted by timing advance (TA). Reception timing of a UL channel/signal from a different user terminal (UE) is adjusted on the radio base station (also referred to as a TRP (Transmission and Reception Point), gNB (gNodeB), and the like)) side.

A UE may employ timing advance for each timing advance group (TAG) (multiple timing advances) configured in advance to perform timing control for UL transmission.

When the multiple timing advances is employed, timing advance groups (TAGs) classified according to transmission timing are supported. The UE may control UL transmission timing in each TAG by assuming that the same TA offset (or TA value) is used for each TAG. In other words, the TA offset may be configured independently for each TAG.

When the multiple timing advances are employed, the UE independently adjusting transmission timing for the cells belonging to each TAG enables matching at a radio base station in terms of timing of uplink signal reception from the UE even when a plurality of cells are used.

A TAG (for example, serving cells belonging to the same TAG) may be configured by a higher layer parameter. The same timing advance value may be applied to the serving cells belonging to the same TAG (for example, serving cells configured with UL). A timing advance group including an SpCell of a MAC entity may be referred to as a primary timing advance group (PTAG), and a TAG other than the PTAG may be referred to as a secondary timing advance group (STAG). The maximum number of TAGs may be X (for example, X = 4) for each cell group (MCG/SCG).

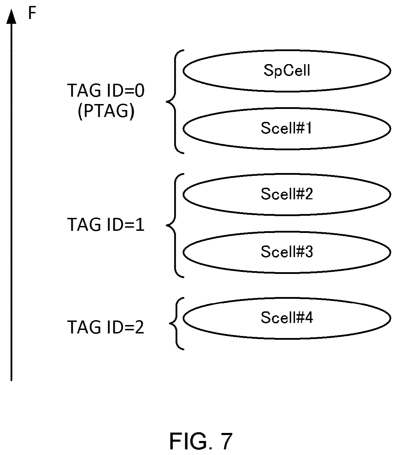

In existing systems (for example, Rel-16 NR), configuration of four TAGs at maximum (for example, MCG/SCG) is supported for each cell group (see FIG. 7). FIG. 7 shows a case where three TAGs are configured for a cell group including an SpCell and SCells #1 to #4. Here, shown is a case where the SpCell and SCell #1 belong to a first TAG (PTAG or TAG #0), SCell #2 and SCell #3 belong to a second TAG (TAG #1), and SCell #4 belongs to a third TAG (TAG #2).

A UE may be notified of a timing advance command (TA command) by using a MAC control element (for example, a MAC CE). The TA command is a command that indicates an uplink channel transmission timing value and is included in the MAC control element. The TA command is signaled from a radio base station to the UE on a MAC layer. The UE controls a certain timer (for example, a TA timer), based on reception of the TA command.

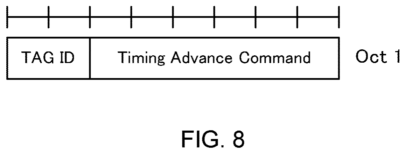

A MAC CE for timing advance command may have a structure including a field for timing advance group index (for example, TAG ID) and a field for timing advance command (see FIG. 8). The TAG ID field is used for indication of the TAG ID of an addressed TAG. The timing advance command field may indicate an index value T_{A} (0, 1, 2, ..., 63) to be used for control of the amount of timing adjustment to be applied by the MAC entity.

A parameter corresponding to each TAG ID may be configured by a higher layer parameter. For example, a parameter such as a time alignment timer (for example, timeAlignmentTimer) corresponding to each TAG ID may be configured. Alternatively, a TAG ID may be configured for each serving cell by a higher layer parameter (for example, tag-ID included in ServingCellConfig). Note that each TAG ID/parameter may be updated by a MAC CE after being configured by a higher layer parameter.

The time alignment timer may be maintained for UL time alignment. In Rel. 17, a time alignment timer may be configured/associated for each TAG. When the UE has received a MAC CE for timing advance command (for example, a TAC MAC CE), the UE starts or restarts a time alignment timer related to each indicated timing advance group (for example, TAG).

When a MAC entity receives the TAC MAC CE, and a certain value (N_{TA}) is maintained for the indicated TAG, the MAC entity uses the timing advance command for the indicated TAG or starts or restarts the time alignment timer related to the indicated TAG. The certain value (N_{TA}) may be timing advance between DL and UL.

Operation when the time alignment timer expires may be defined separately for a PTAG and an STAG. Note that a timing advance group (TAG) including an SpCell of a MAC entity may be referred to as a primary timing advance group (PTAG), and a TAG other than the PTAG may be referred to as a secondary timing advance group (STAG).

For example, in Rel. 17, certain operation for PTAG is employed when a timing advance timer corresponding to a PTAG expires, and certain operation for STAG may be employed when a timing advance timer for STAG expires.

For example, when such a time alignment timer expires, the following operation (for example, the certain operation for PTAG/certain operation for STAG) may be performed.

### {Certain Operation for PTAG}

In a case where the time alignment timer is associated with a PTAG,
- flush all the HARQ buffers of all serving cells.
- notify RRC of release of a PUCCH, if configured, for all the serving cells.
- notify RRC of release of an SRS, if configured.
- clear all configured DL assignments and configured UL assignments.
- clear a PUSCH resource for semi-persistent CSI reporting.
- cause all running time alignment timers to expire.
- maintain N_{TA} of all TAGs.

### {Certain Operation for STAG}

In a case where the time alignment timer is associated with an STAG, for all serving cells belonging to the TAG,
- flush all HARQ buffers.
- notify RRC of release of a PUCCH, if configured.
- notify RRC of release of an SRS, if configured.
- clear all configured DL assignments and UL assignments.
- clear a PUSCH resource for semi-persistent CSI reporting.
- maintain N_{TA} of the TAG.

It is also assumed that, in future radio communication systems, UL transmission is controlled based on timing advance for a serving cell (or a TRP of the serving cell) and a non-serving cell/additional cell (or a TRP of the non-serving cell/additional cell) in inter-cell mobility. Alternatively, a case is assumed that, in future radio communication systems, a different TAG (or TAG-ID) is configured for each of one or more TRPs (for example, a plurality of TRPs having different PCIs) corresponding to a certain cell (or CC). Alternatively, a case is assumed that different TRPs corresponding to a certain cell share a common TAG.

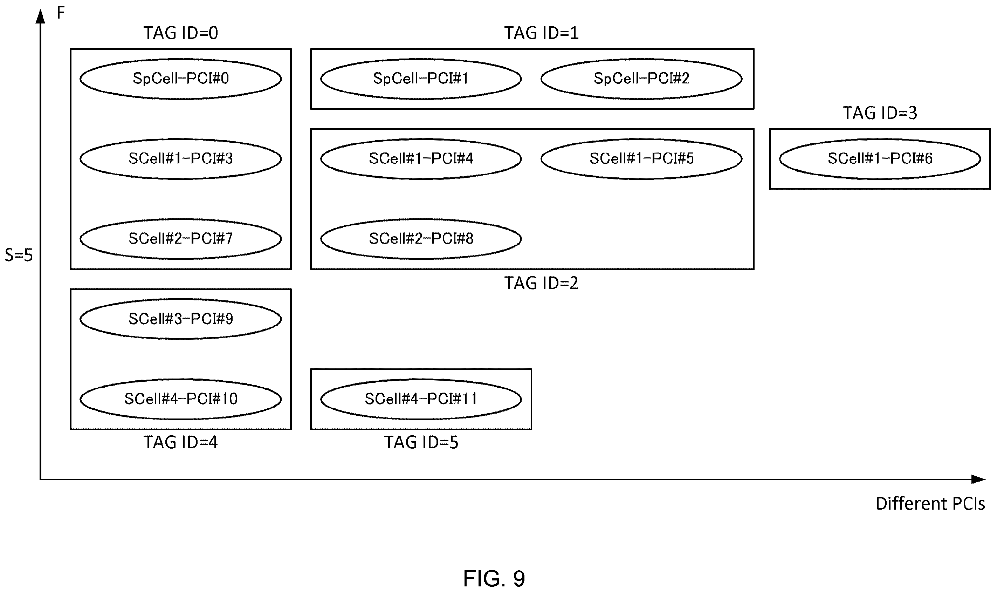

FIG. 9 is a diagram to show an example of a configuration of TAGs each being for a plurality of cells (or TRPs) having different PCIs.

It is also assumed that M PCIs (for example, a serving cell + candidate cells associated with the serving cell) is configurable at maximum per CC and that configuration of N TAG(s) (for example, N ≤ M) at maximum is supported for the maximum M PCIs. In this case, one or a plurality of PCIs may be associated with one TAG.

For up to S serving cell(s) (or for S serving cell(s) at maximum) in a cell group, one or a plurality of PCIs may be associated with one TAG. In this case, T TAG(s) at maximum may be configured in consideration of one PCI per CC (case 1). In other words, (T × N) TAG(s) at maximum may be configured for the max (M × S) cells. Alternatively, up to U TAG(s) at maximum may be configured for the max (M × S) cells (case 2).

In this manner, when candidate cells are configured/applied/supported, it is assumed that different serving cells/different candidate cells are associated with the same TAG. The TAGs of the candidate cells may be indicated from the base station, or may be determined based on the TAs of the candidate cells acquired by the UE.

It is also considered that, regarding UL transmission of the candidate cells (for example, the candidate cells indicated with serving cell switch), the UE performs UL transmission in consideration of the TAs corresponding to the candidate cells. When the TAs of the candidate cells are taken into consideration, the UE needs to perform TA acquisition of the candidate cells.

As TA acquisition of the candidate cells, a plurality of TA acquisition methods are considered, such as TA acquisition using a RACH (for example, RACH-based solutions) and TA acquisition not using a RACH (RACH-less solutions). The TA acquisition method may be interpreted as a TA acquisition scheme, a TA acquisition type, or a TA acquisition procedure. In the present disclosure, TA acquisition, TA measurement, TA calculation, TA computation, and TA determination may be interchangeably interpreted.

For example, the UE may acquire the TAs of the candidate cells by transmitting a RACH indicated/triggered by a PDCCH (for example, a PDCCH ordererd RACH) to the candidate cells. Information (for example, TA values) related to the TAs of the candidate cells may be included in a response signal (for example, a RAR) of the RACH. The RAR may be transmitted from the serving cell, or may be transmitted from the candidate cells. Alternatively, the TAs of the candidate cells may be acquired by using a RACH triggered by the UE or a RACH triggered from a network in a higher layer. The PDCCH order may be triggered only by a source cell (or the serving cell).

Alternatively, the UE may acquire the TAs of the candidate cells by transmitting a signal other than the RACH to the candidate cells. Information (for example, TA values) related to the TAs of the candidate cells may be indicated from the base station to the UE. As the signal other than the RACH, for example, an SRS may be applied.

Alternatively, the UE may measure/calculate/acquire the TAs of the candidate cells, based on a DL signal (for example, a downlink reference signal) transmitted from each cell (for example, candidate cell/serving cell). A method in which the UE acquires the TAs of the candidate cells based on DL signal(s) transmitted from one or more cells may be referred to as UE based TA measurement (for example, UE based TA measurement).

In the UE based TA measurement, the downlink reference signal may be a certain DL signal (for example, a synchronization signal block (for example, an SSB)/CSI-RS or the like). For example, the UE may acquire the TAs of the candidate cells by measuring differences of reception timings of DL signals from a plurality of cells (or two cells).

The plurality of cells may include a reference cell (for example, the serving cell). In this case, the UE may calculate necessary TAs of the candidate cells, based on a reception timing of a reference cell (and a TA value of the reference cell) and a timing difference (for example, T) between the reference cell and the candidate cells. The UE may acquire the TAs of the candidate cells by using a timing advance command (TAC) transmitted from the serving cell.

### (Overview of L1L2-Triggered Mobility (LTM))

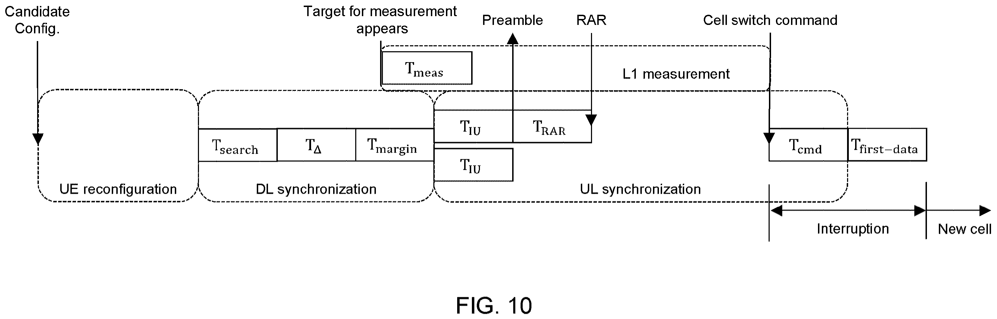

FIG. 10 is a diagram to show an overview of L1L2-triggered mobility (LTM). LTM and L1/L2 inter-cell mobility may be interchangeably interpreted. The UE receives configurations related to candidate cells (candidate cell configurations) from the NW at the time of UE reconfiguration. The UE reconfiguration includes T_{RRC} and T_{proccesing1/Tproccesing2}. T_{RRC} (for example, up to 10 ms) is processing time for RRC reconfiguration for carrying the configurations of the candidate cells (candidate configurations). T_{proccesing1/Tproccesing2} (for example, up to 20 ms for the same FR and up to 40 ms for different FRs) is time for UE processing for each of before and after a cell switch command. This may include L2/3 reconfiguration, RF retuning, baseband retuning, and if necessary, security update and the like.

DL synchronization includes T_{search}, T_{Δ}, and T_{margin}. T_{search} (for example, 0 ms when a cell is known and up to 60 ms when a cell is unknown) is time required for target cell search. T_{Δ} is time for fine tracking and acquisition of all timing information. T_{margin} (for example, up to 2 ms) is time for post-processing for the SSB and the CSI-RS.

L1 measurement (L1 mesurement) includes Tₘₑₐₛ (SMTC period (for example, 20 ms)). Tₘₑₐₛ is a measurement delay from appearance of a target to the cell switch command.

UL synchronization includes T_{IU}, T_{RAR}, and T_{cmd}. T_{IU} (for example, up to 15 ms) is uncertain interruption time at the time of obtaining a first available PRACH occasion in a new cell. T_{RAR} (for example, up to 4 ms) is time for RAR delay. T_{cmd} (for example, up to 5 ms) is processing time of an L1/L2 command (HARQ and paging).

T_{first-data} after T_{cmd} is time for the UE to perform first DL reception/UL transmission on an indication beam of the target cell after an RAR.

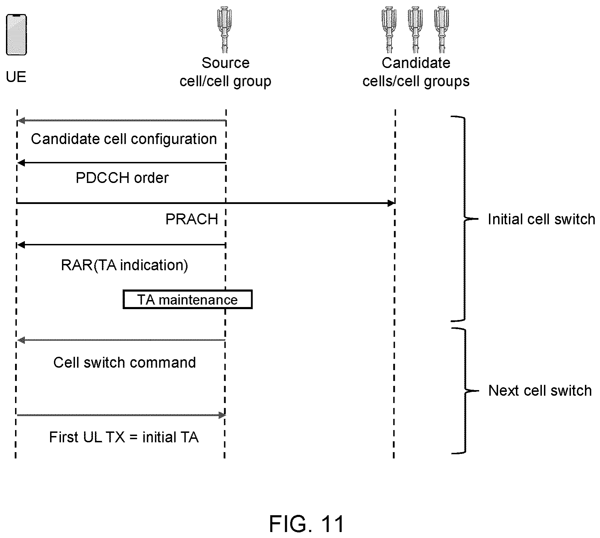

FIG. 11 is a diagram to show a PDCCH indicated RACH (PDCCH ordered RACH) with random access response (RAR) monitoring for the serving cell. Note that, in the present disclosure, a source cell and a source cell group may be interchangeably interpreted. A candidate cell and a candidate cell group may be interchangeably interpreted.

The source cell transmits a candidate cell configuration to the UE. Then, the source cell transmits a RACH indication (PDCCH order) on the PDCCH (for example, including DCI format 1_0) to the UE. Note that, in the indication, parallel RAR is complicated, and thus one candidate cell is indicated. Then, the UE transmits the PRACH in the RACH procedure to the candidate cell for TAG/TA acquisition.

Next, the source cell transmits a RAR (TA indication) to the UE. In this case, because only one common search space (CSS) is configured, the RAR is monitored in the SpCell (only in a Distributed Unit (DU)). Then, the UE may perform transmission and reception in the current serving cell. Then, in the source cell, TA adjustment is performed.

Next, the source cell transmits the cell switch command to the UE. In this case, TA information can be moved from the source cell to the target cell. In this case, UL synchronization of all the candidate cells may not complete after initial cell switch. The UE performs first UL transmission by using initial TA.

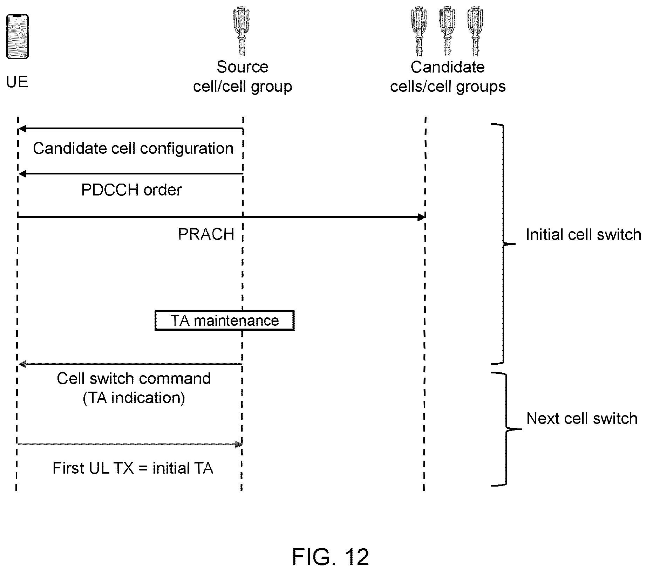

FIG. 12 is a diagram to show a PDCCH indicated RACH (PDCCH ordered RACH) without random access response (RAR) monitoring for candidate cells. Regarding FIG. 12, only differences from FIG. 11 will be described. In the example of FIG. 12, a plurality of candidate cells may be indicated in a RACH indication (PDCCH order) on the PDCCH. The UE may transmit the PRACH in the RACH procedure to the candidate cells to acquire a plurality of TAGs/TAs. Then, the source cell transmits a TA indication in the cell switch command, without transmitting a RAR.

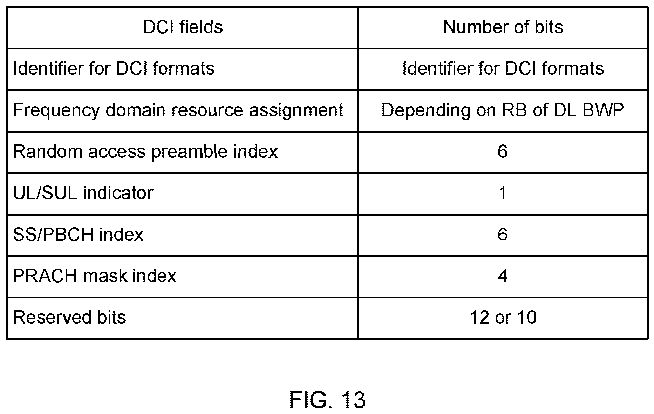

FIG. 13 is a diagram to show DCI format 1_0 CRC-scrambled with a C-RNTI. "Frequency domain resource assignment" may be used for the PDCCH indicated RACH (PDCCH order), for example. For example, when "Frequency domain resource assignment" indicates all 1, it may mean that the DCI format 1_0 is used as the PDCCH order.

"Random access preamble index" may be used for Contention based Random Access (CBRA). For example, when "Random access preamble index" indicates all 0, it may mean that it is used for CBRA. "Reserved bits" are 12 bits in a case of operation in a cell with spectrum-sharing channel access, and 10 bits otherwise.

As the TA acquisition methods, when the random access procedure (see FIG. 12) without monitoring of the RAR for the PRACH transmitted by the UE is configured/applied, there may arise a case in which the network (for example, the base station) side cannot receive or fails to receive the PRACH. In the random access procedure with monitoring of the RAR, the UE can determine a success/failure of PRACH transmission and control retransmission of the PRACH and the like based on whether or not the RAR is received in a RAR window after the PRACH transmission.

On the other hand, when the random access procedure without monitoring of the RAR is configured/applied, how the UE recognizes a success/failure of PRACH transmission (or that the network side has succeeded/failed in reception of the PRACH) presents a problem. For example, when the UE cannot appropriately recognize a failure in PRACH reception on the network side, there also arises a problem that retransmission of the PRACH and the like are not appropriately performed and TA computation/acquisition is not appropriately performed.

In this manner, in TA acquisition using PRACH transmission without monitoring of the RAR, how the UE recognizes/determines that the network cannot receive the PRACH is not clarified. When the UE cannot recognize a PRACH reception failure in the network, UL transmission timing cannot be appropriately controlled, which may degrade communication quality.

Alternatively, when the random access procedure without monitoring of the RAR for the PRACH is configured/applied, how to control PRACH retransmission control (for example, transmission power/number of retransmissions and the like) based on the success/failure of the PRACH presents a problem. In existing systems (for example, Rel. 17 or earlier versions), although a PRACH transmission condition and the like are determined based on reception of the RAR in the RAR window/PDCCH order, how to perform control in a case without RAR monitoring presents a problem.

In view of this, the inventors of the present invention focused on a fact that a RACH procedure (for example, PRACH transmission) without monitoring of a RAR is configured/supported in TA acquisition of candidate cells, studied a control method for the RACH procedure (including a RACH retransmission procedure) without monitoring of the RAR, and came up with the idea of an example of the present embodiment.

Embodiments according to the present disclosure will be described in detail with reference to the drawings as follows. Note that the aspects (for example, cases) below may each be employed individually, or may be employed in combination of at least two.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, another message (for example, a message from a core network, such as a positioning protocol (for example, NR Positioning Protocol A (NRPPa)/LTE Positioning Protocol (LPP)) message), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the following embodiments, a "plurality of" and "two" may be interchangeably interpreted. A "TAG" and a "TAG ID" may be interchangeably interpreted. A "cell," a "CC," and a "carrier" may be interchangeably interpreted. In the following embodiments, "calculate", "compute", and "acquire" may be interchangeably interpreted.

The following description may be applied in inter-cell mobility (for example, L1/L2 inter cell mobility) or may be applied in communication control other than inter-cell mobility. L1/L2 inter-cell mobility may be interpreted as at least one of cell switch, cell switching, and cell change.

### (Radio Communication Method)

### <First Embodiment>

A first embodiment will describe an example of a definition of a transmission success or a reception success of a PRACH and a criterion for determining the transmission success or the reception success of the PRACH when a RACH procedure (for example, PRACH transmission) without a random access response (for example, a RAR) is performed. In the present disclosure, a success may be interpreted as a completion.

A RACH without a RAR may be interpreted as a RACH without RAR monitoring (for example, a RACH without RAR monitoring). A RACH may be interpreted as PRACH transmission triggered by a PDCCH order. A RACH procedure/PRACH transmission without RAR monitoring may be interpreted as a RACH procedure/PRACH transmission in which RAR monitoring is unnecessary or a RACH procedure/PRACH transmission in which RAR monitoring is not required.

The first embodiment may be applied to a RACH procedure/PRACH transmission used for timing advance acquisition (for example, TA acquisition), or may be applied to a RACH procedure/PRACH transmission performed for a purpose other than TA acquisition.

The UE may be configured/indicated with configuration/enabling/activation of a RACH procedure without RAR monitoring (for example, a PDCCH orderd RACH without RAR monitoring) from the base station by RRC/MAC CE/DCI. When the UE is configured with the RACH procedure without a RAR, the UE need not assume/expect that a RAR corresponding to a PRACH transmitted based on a PDCCH order is transmitted from the base station. Alternatively, when the UE is configured with the RACH procedure without a RAR, the UE need not assume/expect reception of a RAR.

When a RACH operation without RAR monitoring is configured (or enabled/activated), whether reception on the network (for example, the base station) side for the PRACH transmitted by the UE has succeeded may be determined based on a certain rule/certain condition. For example, a reception success of the PRACH by the network may be defined/determined based on at least one of the following option 1-1 to option 1-2.

### {Option 1-1}

When the UE does not receive certain information within certain duration after PRACH transmission, it may mean that PRACH reception in the network (for example, the base station) has succeeded.

In the present disclosure, the certain duration may be interpreted as within a certain window/certain timer (for example, within certain window/timer). The certain duration (for example, the certain window/certain timer) may be defined in a specification, or may be configured/indicated by RRC/MAC CE /DCI. Alternatively, the certain duration may be determined based on a value reported by UE capability (for example, UE capability), or may be determined based on a certain parameter/condition.

The certain duration (for example, the certain window/certain timer) may be started after the PRACH is transmitted from the UE (for example, simultaneously with PRACH transmission, or after certain duration has elapsed from PRACH transmission). The certain duration (for example, the certain window/certain timer) may be configured with configurations (for example, a start timing/end timing/duration) different from the RAR monitoring window defined/configured in the RACH procedure with RAR monitoring.

The certain information may be information transmitted from a specific cell (for example, the serving cell). For example, the certain information may be a PDCCH transmitted from the serving cell (for example, a PDCCH order used as a PRACH trigger). Alternatively, the certain information may be a DCI format (for example, DCI format 1_0) for a random access procedure initiated by a PDCCH order.

The PDCCH order (or the DCI format) as the certain information may be any PDCCH order or a specific PDCCH order.

The specific PDCCH order may be a PDCCH order for indicating the same cell ID/same SSB/same RACH parameter as the PDCCH order already received by the UE (or the PDCCH order used as a trigger for the PRACH transmitted by the UE), for example. The same RACH parameter may mean at least one of the same PRACH occasion and the same RACH index (for example, random access preamble index/PRACH mask index).

For example, when the UE transmits a first PRACH by a first PDCCH order and then receives a PRACH indicating at least one of the same cell ID, the same SSB index, and the same PRACH as the first PDCCH order in certain duration, the UE may determine that PRACH transmission has failed. To indicate at least one of the same cell ID, the same SSB index, and the same PRACH may mean to indicate the same cell ID and the same SSB index, to indicate the same cell ID and the same RACH, to indicate the same SSB index and the same RACH, or to indicate the same cell ID, the same SSB index, and the same PRACH.

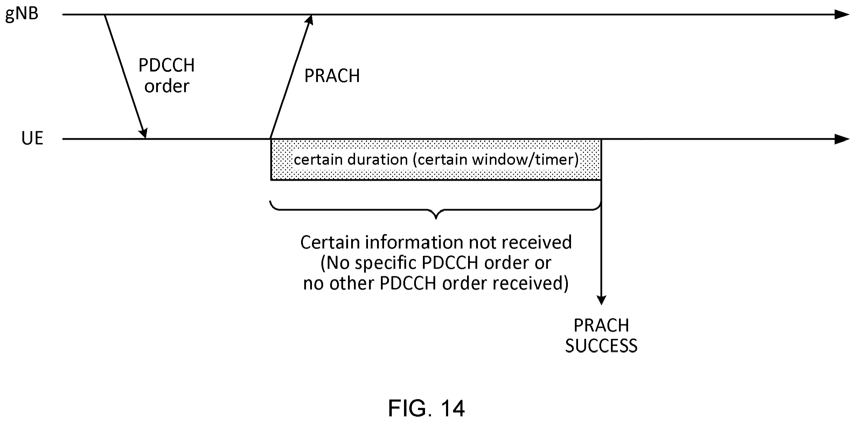

When the UE does not receive the certain information (for example, any PDCCH order/specific PDCCH order) within certain duration after PRACH transmission, the UE may assume/expect/determine that PRACH reception by the network (for example, the base station) has succeeded (see FIG. 14). For example, when the UE does not receive the certain information within certain duration, the UE may assume/expect/determine that PRACH transmission has succeeded at the end of the certain duration (for example, when a certain window ends/when a certain timer expires).

The UE may determine that PRACH reception in the network (for example, the base station) has succeeded in consideration of at least one of the following option 1-1-1 to option 1-1-3 (or a combination of two or more), in addition to option 1-1 or instead of option 1-1.

### <<Option 1-1-1>>

When the UE does not receive another PDCCH order/timing advance command (TAC) from a specific cell (for example, the serving cell) in certain duration after PRACH transmission, the UE may determine that PRACH reception in the network (for example, the base station) has succeeded. For example, when the UE does not receive another PDCCH order/TAC within certain duration, the UE may assume/expect/determine that PRACH transmission has succeeded at the end of the certain duration (for example, when a certain window ends/when a certain timer expires) (see FIG. 14).

Another PDCCH order (or TAC) may be another PDCCH order different from the specific PDCCH order. For example, another PDCCH order (or TAC) #2 may be a PDCCH order different from PDCCH order #1 already received by the UE, or a PDCCH order triggering PRACH #2 different from PRACH #1 transmitted by the UE (or a TAC different from the TAC already indicated to the UE). The TAC may be interpreted as a timing advance group (TAG).

For example, another PDCCH order may mean a PDCCH order for indicating a PRACH parameter (for example, a PRACH occasion) different from the specific PDCCH order. Note that the PRACH parameter is not limited to the PRACH occasion.

Option 1-1-1 may be assumed/supported (or suitably applied) when there is only one candidate cell/TAG for which TA acquisition is performed.

### <<Option 1-1-2>>

When the UE receives another PDCCH order/timing advance command (TAC) from a specific cell (for example, the serving cell), the UE may determine that PRACH reception in the network (for example, the base station) has succeeded.

Another PDCCH order (or TAC) may be another PDCCH order different from the specific PDCCH order. For example, another PDCCH order (or TAC) #2 may be a PDCCH order different from PDCCH order #1 already received by the UE, or a PDCCH order triggering PRACH #2 different from PRACH #1 transmitted by the UE (or a TAC different from the TAC already indicated to the UE). The TAC may be interpreted as a timing advance group (TAG).

For example, another PDCCH order may mean a PDCCH order for indicating a PRACH parameter (for example, a PRACH occasion) different from the specific PDCCH order. Note that the PRACH parameter is not limited to the PRACH occasion.

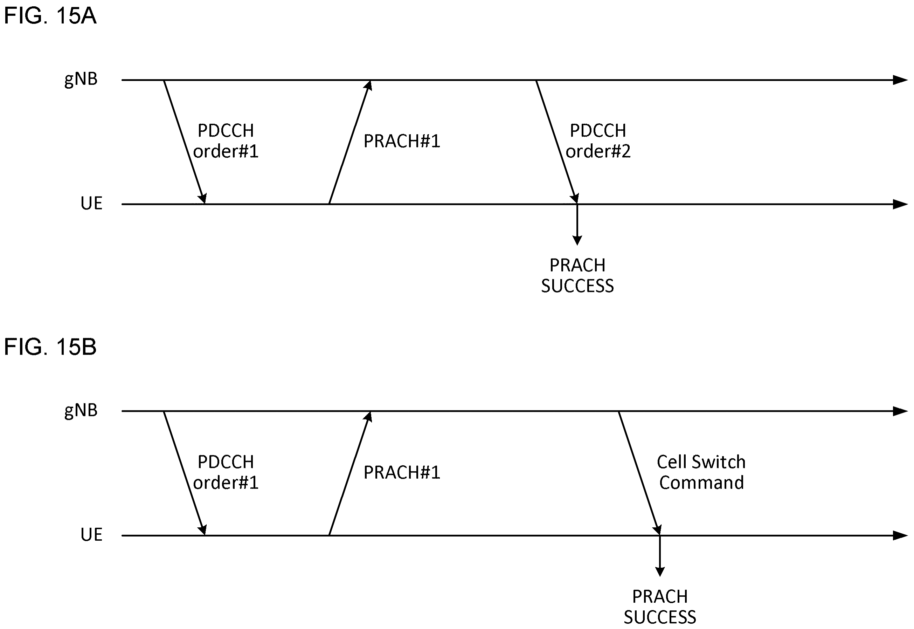

The reception timing of another PDCCH/TAC is not limited to certain duration after PRACH transmission, and may be any timing (see FIG. 15A). For example, when the UE transmits a first PRACH based on first PDCCH order #1 and then receives second PDCCH order #2 triggering second PRACH #2 different from first PRACH (for example, PRACH occasion) #1, the UE may determine that reception of first PRACH #1 has succeeded in the network (for example, base station).

In option 1-1-2, TA acquisition may be assumed/applied when the TA acquisition is sequentially performed for one candidate cell/TAG at a time (for example, when TA acquisition of a certain candidate cell is performed, and then TA acquisition of another candidate cell is performed).

### <<Option 1-1-3>>

When the UE receives a cell switch command (for example, a cell switch command) from a specific cell (for example, the serving cell), the UE may determine that PRACH reception in the network (for example, the base station) has succeeded (see FIG. 15B).

The reception timing of the cell switch command is not limited to certain duration after PRACH transmission, and may be any timing.

### {Option 1-2}

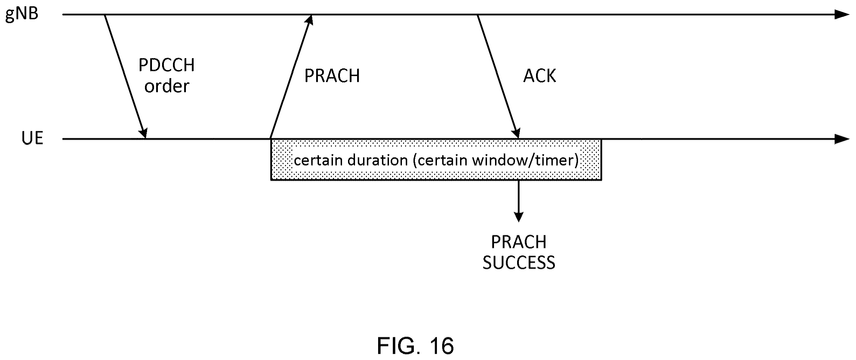

When the UE receives certain information (for example, transmission confirmation information (for example, a Hybrid Automatic Repeat reQuest ACKnowledgement (a HARQ-ACK or an ACK)) corresponding to PRACH transmission within certain duration after the PRACH transmission, it may be defined that PRACH reception by the network (for example, the base station) has succeeded (see FIG. 16). The certain information (for example, the ACK) may be transmitted from a specific cell (for example, a cell/serving cell/candidate cell from which the PRACH is transmitted).

As the certain information (for example, the ACK) corresponding to PRACH transmission, at least one of the following option 1-2-1 to option 1-2-2 may be applied.

### <<Option 1-2-1>>

An ACK corresponding to PRACH transmission may be transmitted from the base station to the UE by DCI. In this case, the ACK may be indicated based on at least one of a value of a certain field included in a DCI format and an RNTI corresponding to the DCI format.

For example, when a certain field/certain bit included in a certain DCI format scrambled with a certain RNTI has a certain value, the UE may determine an ACK.

The certain RNTI may be at least one of a C-RNTI and a CS-RNTI, for example. Alternatively, the certain RNTI may be another RNTI.

The certain DCI format may be at least one of DCI format 1_0/1_1. When at least one of DCI format 1_0/1_1 is applied to an ACK indication, the ACK may be indicated using a part of a field in existing DCI format 1_0/1_1.

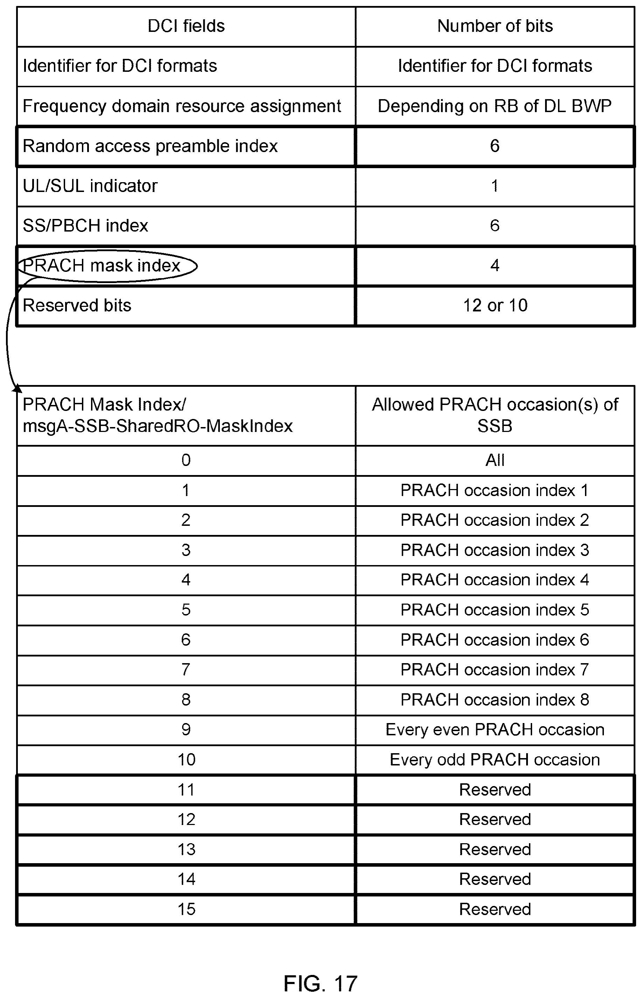

The certain field/certain bit may be at least one of a random access preamble index (for example, a Random access preamble index), a PRACH mask index (for example, a PRACH mask index), and a reserved bit (for example, Reserved bits) (see FIG. 17). Note that the certain field/certain field is not limited to these.

For example, when the ACK is indicated by DCI format 1_0 CRC-scrambled with a C-RNTI, at least one of the following case 1-2-1A to case 1-2-1C may be applied. Note that case 1-2-1A to case 1-2-1C are an example, and are not limited to this.

### - Case 1-2-1A

All or a part (for example, 1 bit) of the reserved bits included in DCI may be used for an ACK indication. For example, when all of the reserved bits included in DCI are configured to a certain value (for example, 1), it may mean an ACK. Alternatively, when a part (for example, 1 bit) of the reserved bits included in DCI is configured to a certain value (for example, 1), it may mean an ACK.

### - Case 1-2-1B

A random access preamble index (for example, Random access preamble index) field included in DCI may be used for an ACK indication. For example, when all of the bits in the random access preamble index (for example, Random access preamble index) field are configured to a certain value (for example, 0), it may mean an ACK.

In existing systems (for example, Rel. 17 or earlier versions), when all of the bits of the random access preamble index (for example, Random access preamble index) field are configured to a certain value (for example, 0), it means a contention based random access procedure (for example, CBRA). Here, however, it may mean an ACK instead of meaning CBRA. In this case, in the DCI format for an ACK indication corresponding to the RACH procedure/PRACH transmission without RAR monitoring, the contention based random access procedure (for example, CBRA) need not be supported.

### - Case 1-2-1C

A PRACH mask index (for example, PRACH mask index) field included in DCI may be used for an ACK indication. For example, when the PRACH mask index (for example, PRACH mask index) field is configured to a certain value (for example, 11 to 15), it may mean an ACK.

Alternatively, when all of the bits in the PRACH mask index field are configured to a certain value (for example, 0), it may mean an ACK. In this case, the contention based random access procedure (for example, CBRA) need not be supported.

Only one of case 1-2-1A to case 1-2-1C may be applied, or case 1-2-1A to case 1-2-1C may be applied in combination.

An SS/PBCH index field included in DCI may have the same value as, or may have a different value from, the SS/PBCH index indicated by a PRACH (for example, a first PRACH) corresponding to an ACK.

In a frequency domain resource assignment field included in DCI, all of the bits may have a certain value (for example, 1), or may have another value.

Note that the ACK may be indicated by different DCI other than DCI format 1_0/1_1, or may be indicated by a MAC CE.

### <<Option 1-2-2>>

The ACK may be received in the same search space as the search space for receiving the PDCCH order. To the ACK (or ACK reception), the same QCL as the PDCCH order may be applied, or the same QCL as the SSB index indicated by the PDCCH order may be applied. Alternatively, the ACK may be received in any search space, or may be received with any QCL.

As described in the first embodiment, by the UE performing determination of a success of PRACH transmission or reception and thereby controlling the random access procedure based on whether or not certain information/ACK is received, the random access procedure without RAR monitoring can be appropriately performed.

### <Second Embodiment>

A second embodiment will describe an example of definition of a transmission failure or reception failure of a PRACH and a criterion for determining the transmission failure or the reception failure of the PRACH when a RACH procedure (for example, PRACH transmission) without a random access response (for example, a RAR) is performed.

The second embodiment may be applied to a RACH procedure/PRACH transmission used for timing advance acquisition (for example, TA acquisition), or may be applied to a RACH procedure/PRACH transmission performed for a purpose other than TA acquisition. The second embodiment may be applied in combination with a part or all of the configurations described in the first embodiment as appropriate.

When a RACH operation without RAR monitoring is configured (or enabled/activated), whether the network (for example, the base station) has failed to receive the PRACH transmitted by the UE may be defined/determined based on a certain rule/condition. For example, a transmission failure or a reception failure of the PRACH by the network may be defined/determined based on at least one of the following option 2-1 to option 2-2.

### {Option 2-1}

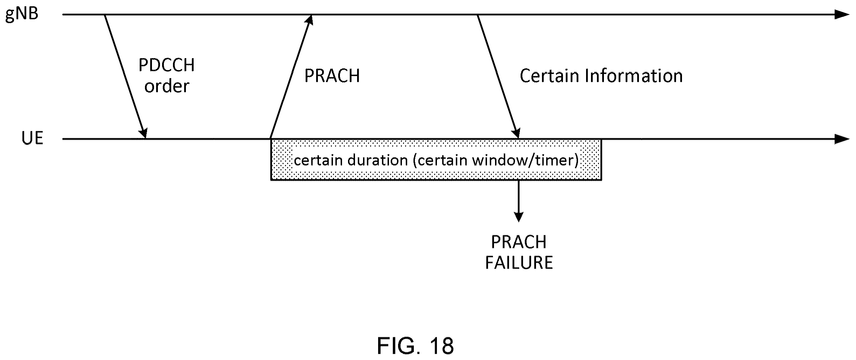

When the UE receives certain information within certain duration after PRACH transmission, it may mean that PRACH reception in the network (for example, the base station) has failed (see FIG. 18).

The certain information may be information transmitted from a specific cell (for example, the serving cell). For example, the certain information may be a PDCCH transmitted from the serving cell (for example, a PDCCH order used as a PRACH trigger). Alternatively, the certain information may be a DCI format (for example, DCI format 1_0) for a random access procedure initiated by a PDCCH order.

The PDCCH order (or the DCI format) as the certain information may be any PDCCH order or a specific PDCCH order.

The specific PDCCH order may be a PDCCH order for indicating the same cell ID/same SSB/same RACH parameter as PDCCH order #1 already received by the UE (or PDCCH order #1 used as a trigger for the PRACH transmitted by the UE), for example. The same RACH parameter may mean at least one of the same PRACH occasion and the same RACH index (for example, random access preamble index/PRACH mask index).

For example, when the UE transmits a first PRACH by a first PDCCH order and then receives a PRACH indicating at least one of the same cell ID, the same SSB index, and the same PRACH as the first PDCCH order in certain duration, the UE may determine that PRACH transmission has failed. To indicate at least one of the same cell ID, the same SSB index, and the same PRACH may mean to indicate the same cell ID and the same SSB index, to indicate the same cell ID and the same RACH, to indicate the same SSB index and the same RACH, or to indicate the same cell ID, the same SSB index, and the same PRACH.

Alternatively, when the UE receives any PDCCH order/TAC (for example, another PDCCH order/TAC) in certain duration, the UE may assume/expect/determine that PRACH reception in the network (for example, the base station) has failed. In this case, TA acquisition may be assumed/applied when the TA acquisition is sequentially performed for one candidate cell/TAG at a time (for example, when TA acquisition of a certain candidate cell is performed, and then TA acquisition of another candidate cell is performed).

### {Option 2-2}

When the UE does not receive the certain information (for example, the ACK) corresponding to PRACH transmission within certain duration after PRACH transmission, it may mean that PRACH reception by the network (for example, the base station) has failed. The certain information (for example, the ACK) may be transmitted from a specific cell (for example, a cell/serving cell/candidate cell from which the PRACH is transmitted).

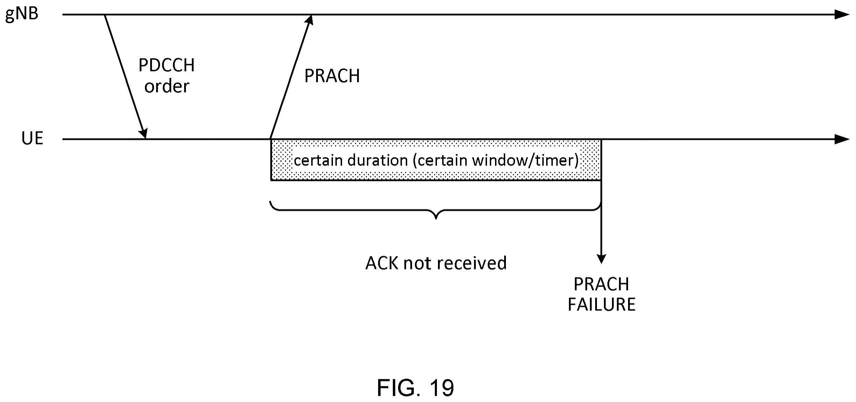

When the UE cannot receive the ACK corresponding to the PRACH in certain duration after PRACH transmission, the UE may determine that the PRACH transmission has failed (see FIG. 19). For example, when the UE does not receive the certain information within certain duration, the UE may assume/expect/determine that PRACH transmission has failed at the end of the certain duration (for example, when a certain window ends/when a certain timer expires).

### {UE Operation after PRACH Failure}

When PRACH reception by the network (for example, the base station) fails, or the UE declares/determines a failure of PRACH transmission, the UE may apply at least one of the following UE operation 2-1 to UE operation 2-4. The UE may apply two or more of UE operation 2-1 to UE operation 2-4 in combination.

### <<UE Operation 2-1>>

After PRACH transmission fails, the UE may perform retransmission of the PRACH with increased transmission power (power ramping application). The transmission power to be applied to retransmission of the PRACH (for example, the transmission power to be increased) may be defined in a specification, or may be indicated by RRC/MAC CE/DCI. Alternatively, the transmission power to be applied to retransmission of the PRACH (for example, the transmission power to be increased) may be determined based on a value reported in UE capability (for example, UE capability).

For power ramping, at least one of the following UE operation 2-1-1 to UE operation 2-1-2 may be applied.

### - UE Operation 2-1-1

When the UE receives a PDCCH order for indicating the same cell ID/SSB/RACH occasion for the same candidate cell, the UE may increase the transmission power for the PRACH (for example, the PRACH to be retransmitted). On the other hand, when the UE receives a PDCCH order for indicating a different cell ID/SSB/RACH occasion, the UE need not increase the transmission power for the PRACH (for example, the PRACH to be retransmitted) (may maintain the transmission power).

### - UE Operation 2-1-2

When there is an indication related to transmission power (for example, an indication of power ramping), the UE may increase the transmission power for the PRACH (for example, the PRACH to be retransmitted). The indication related to transmission power (for example, the indication of power ramping) may be indicated by a PDCCH order (or DCI) for indicating a PRACH failure or a PDCCH order (or DCI) as a basis for determining a PRACH failure, or may be configured/indicated by RRC/MAC CE.

### <<UE Operation 2-2>>

After PRACH transmission fails, the UE may perform a certain number of retransmissions of the PRACH. The number of retransmissions of the PRACH may be defined in a specification, or may be indicated by RRC/MAC CE/DCI. Alternatively, the number of retransmissions of the PRACH may be determined based on a value reported in UE capability (for example, UE capability).

When there is information related to a repetition indication/number of repetitions of the PRACH (for example, the PRACH to be retransmitted), the UE may perform repetition transmission of the PRACH (for example, the PRACH to be retransmitted). The information related to a repetition indication/number of repetitions may be indicated by a PDCCH order (or DCI) for indicating a PRACH failure or a PDCCH order (or DCI) as a basis for determining a PRACH failure, or may be configured/indicated by RRC/MAC CE.

### <<UE Operation 2-3>>

After PRACH transmission fails, the UE may perform PRACH transmission indicated by another PDCCH order. For example, when the PRACH is triggered by another PDCCH order in certain duration, the UE may determine that the transmitted PRACH has failed and perform PRACH transmission triggered by another PDCCH order.

Alternatively, after PRACH transmission fails, the UE may perform TA acquisition for another candidate cell. Alternatively, after PRACH transmission fails, the UE may perform TA acquisition using another method. The TA acquisition using another method may be TA acquisition using other than the RACH procedure.

### <<UE Operation 2-4>>

After PRACH transmission fails, the UE may perform retransmission of the PRACH based on the same power/number of repetitions as initial transmission, without applying power ramping/repetition transmission.

### <<Determination of Initial Transmission/Retransmission>>

A case is assumed in which the UE receives PDCCH order #2 after PRACH transmission triggered by PDCCH order #1 and PDCCH order #2 triggers the same PRACH as in PDCCH order #1 (for example, indicates the same PRACH occasion/RACH index). In this case, the UE may determine whether PDCCH order #2 is for initial transmission or for retransmission, based on certain information.

The certain information indicating initial transmission or retransmission may be indicated in a certain field included in the PDCCH order (or the DCI). For the certain field, a reserved bit (for example, 1 bit) may be used, an NDI field may be used, or a newly added field may be used. For example, when the certain field is 0, it may mean that the PRACH is for initial transmission, and when the certain field is 1, it may mean that the PRACH is for retransmission.

As described in the second embodiment, by the UE performing determination of a failure of PRACH transmission or reception and thereby controlling the random access procedure based on whether or not certain information/ACK is received, the random access procedure without RAR monitoring can be appropriately performed.

### <Third Embodiment>

A third embodiment will describe an example of certain duration defined/configured in the RACH procedure without RAR monitoring (for example, the RA procedure without RAR monitoring).

In the RACH procedure without the random access response (for example, the RAR), certain duration (or a certain window/timer) may be defined/configured. As the certain duration, a new window/timer different from the window (for example, the RAR window/timer) in existing systems (for example, Rel. 17 or earlier versions) may be applied, or the window/timer in existing systems may be reused.

The certain duration may be started at the start timing of PRACH transmission in the RACH procedure without RAR monitoring (for example, the PRACH triggered by the PDCCH order), or after transmission after certain duration of PRACH transmission (for example, the start timing of a first slot after PRACH transmission).

The certain duration may be stopped/updated/restarted when the UE receives certain information from a specific cell (for example, the serving cell). The certain information may be a PDCCH order/timing advance command (TAC)/cell switch command/ACK, for example.

The certain duration (or the certain window/timer) may be defined in a specification, or may be configured/indicated by RRC/MAC CE/DCI. Alternatively, it may be determined based on a value reported by the UE as UE capability information.

As a configuration of the certain duration (or the certain window/timer), at least one of the following option 3-1 to option 3-2 may be applied.

### {Option 3-1}

A single/common timer having one value (or a common value) may be configured for all candidate cells (for example, for each UE, or for each MAC entity/MAG/SCG).

### {Option 3-2}

A separate timer may be configured (an individual timer may be configured) for each candidate cell (or a plurality of candidate cells as a cell set).

The timer configured in option 3-1/3-2 may be updated/indicated from the network (for example, the base station) by RRC/MAC CE.

### <Fourth Embodiment>

A fourth embodiment will describe an example of a success or a failure of PRACH transmission/reception in the RACH procedure without RAR monitoring (for example, the RA procedure without RAR monitoring) and UE operation based on the success or the failure of the PRACH transmission/reception (for example, control of PRACH retransmission and the like).

The fourth embodiment may be applied in combination with the configuration described in at least one of the first embodiment to the third embodiment.

In existing systems (for example, Rel. 17) in which the RACH procedure with RAR monitoring is supported, when the random access procedure is initiated in the serving cell, the UE (or the MAC entity) resets a transmission power counter for a PRACH preamble to 1. In other words, in existing systems, when the UE receives the PDCCH order for indicating start of PRACH transmission, the transmission power counter for the PRACH (for example, a power ramping counter) is reset (for example, the power ramping counter is restarted from 1).

In existing systems, when the UE cannot receive a RAR in the RAR window, it is determined that the random access procedure has failed (has not succeeded). In this case, when the base station transmits the PDCCH order next (or when the UE receives the PDCCH order next), a new RACH procedure is initiated, and the transmission power counter is restarted from 1.

In the RACH procedure without RAR monitoring, when the PRACH is determined as a failure based on reception of the PDCCH order and retransmission of the PRACH is performed, use of mechanisms of existing systems may inhibit appropriate control (for example, increase) of the transmission power for retransmission of the PRACH.

In existing systems (for example, Rel. 17), when selection of the SSB/CSI-RS is not changed from selection at the time of previous PRACH transmission (or when the SSB/CSI-RS associated with the PRACH is not changed from the previous PRACH), the power counter (or the power ramping counter) for the transmission power for the PRACH is incremented by 1, and the transmission power is recalculated.

In the RACH procedure without RAR monitoring, when the PRACH is determined as a success based on reception of the PDCCH order, use of mechanisms of existing systems causes a case in which the power counter (or the power ramping counter) for the transmission power for the PRACH is incremented by 1 when the PRACH is determined as a success.

In this manner, in existing systems (for example, Rel. 17) in which the RACH procedure with RAR monitoring is supported, when the UE cannot receive a RAR in the RAR window, it is determined that the random access procedure has failed (has not succeeded). On the other hand, in the RACH procedure without RAR monitoring, because reception of a RAR itself is not assumed, the criterion for determining a success or a failure of the RACH procedure in existing systems cannot be applied.

Thus, in the RACH procedure without RAR monitoring (or with omitted RAR monitoring), at least one of the following option 4-1 to option 4-2 may be applied.

### {Option 4-1}

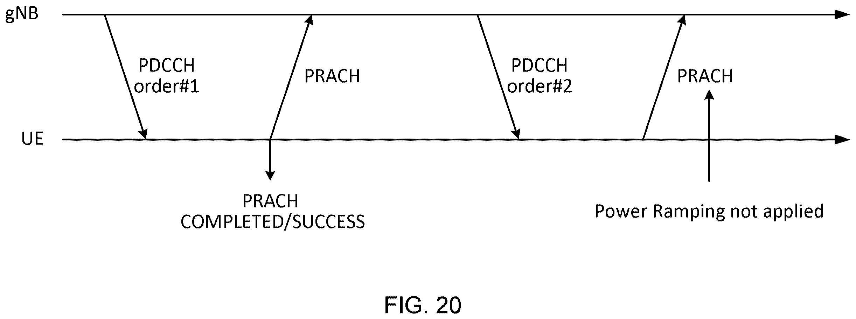

In the RACH procedure without RAR monitoring, when the UE transmits the PRACH based on PDCCH order #1, it may mean that the PRACH has completed (or it may be considered that the PRACH has succeeded). The UE may control not to perform RAR monitoring, assuming that the PRACH transmission has succeeded/completed simultaneously with PRACH transmission (see FIG. 20).

In this case, when the network transmits the PDCCH order (for example, other PDCCH order #2), the UE may consider that a new RACH procedure/PRACH transmission (for example, PRACH transmission in which the transmission power counter is started from 1) is triggered by the PDCCH order #2. In this case, power ramping is not required for the new PRACH transmission, and the UE may perform PRACH transmission without applying power ramping.

### {Option 4-2}

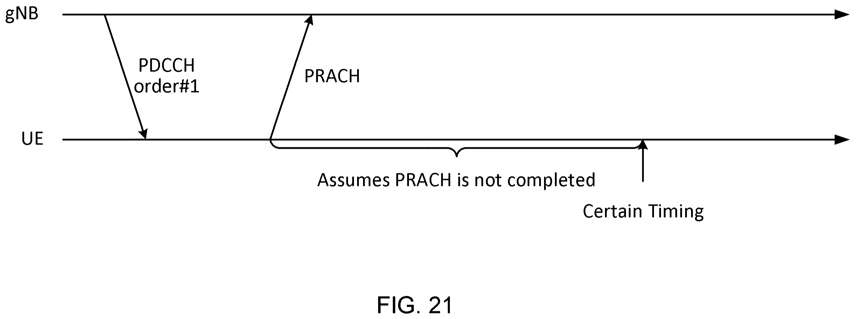

In the RACH procedure without RAR monitoring, when the UE transmits the PRACH based on the PDCCH order, it may mean that the PRACH has not completed (or it may be considered that the PRACH has not succeeded). The UE may assume/determine that it does not complete or succeed until the RACH procedure for a candidate cell satisfies a certain condition (for example, a certain condition) (or before a certain timing) (see FIG. 21).

When the UE receives the PDCCH order (for example, another PDCCH order) before the certain condition is satisfied (or before the certain timing), whether or not power ramping is applied to new PRACH transmission may be determined based on a reference signal (for example, an SSB/CSI-RS) associated with the new PRACH transmission.

For example, when the UE receives the PDCCH order (for example, another PDCCH order) before the certain condition is satisfied (or before the certain timing), the RACH procedure/PRACH retransmission (for example, control of the transmission power counter) in existing systems may be applied. In this case, when the SSB/CSI-RS associated with new PRACH transmission is not changed (or associated with the same SSB/CSI-RS), the transmission power counter may be incremented by a certain value (for example, 1), and the transmission power may be recalculated.

On the other hand, when the SSB/CSI-RS associated with new PRACH transmission is changed (or associated with a different SSB/CSI-RS), the transmission power counter need not be incremented.

The UE may perform transmission power control (for example, power ramping) of the PRACH (for example, the PRACH to be retransmitted) by using the RACH procedure of the same mechanism as existing systems, regardless of whether the UE recognizes a reception failure of the PRACH on the network/base station side.

The certain condition (or the certain timing) may be at least one of the following option 4-2-1 to option 4-2-3.

### <<Option 4-2-1>>

The certain condition (or the certain timing) may be before the UE receives timing advance (TA) included in the cell switch command. In other words, when the UE newly receives the PDCCH order before receiving timing advance (TA) included in the cell switch command, the UE may determine transmission power control (for example, whether or not power ramping is applied, or whether or not the transmission power command is incremented), based on the SSB/CSI-RS associated with new PRACH transmission.

Otherwise (for example, when the PDCCH order is not newly received before receiving TA included in the cell switch command), it may mean that the PRACH has completed (or it may be considered that the PRACH has succeeded).

### <<Option 4-2-2>>

The certain condition (or the certain timing) may be before the RAR window or the certain window/certain timer expires. In other words, when the UE newly receives the PDCCH order before the RAR window or the certain window/certain timer expires, the UE may determine transmission power control (for example, whether or not power ramping is applied, or whether or not the transmission power command is incremented), based on the SSB/CSI-RS associated with new PRACH transmission.

Otherwise (for example, when the PDCCH order is not newly received before the RAR window or the certain window/certain timer expires), it may mean that the PRACH has completed (or it may be considered that the PRACH has succeeded).

### <<Option 4-2-3>>

The certain condition (or the certain timing) may be before the UE receives the PDCCH order for indicating a different SSB/RACH occasion to a candidate cell. In other words, when the UE newly receives the PDCCH order (for example, the PDCCH for indicating the same SSB/RACH occasion) before receiving the PDCCH order for indicating a different SSB/RACH occasion to a candidate cell, the transmission power counter may be incremented by a certain value (for example, 1), and the transmission power may be recalculated.

Otherwise (for example, when the PDCCH order for indicating the same SSB/RACH occasion is not newly received before the UE receives the PDCCH order for indicating a different SSB/RACH occasion to a candidate cell), it may mean that the PRACH has completed (or it may be considered that the PRACH has succeeded).

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- Supporting of specific processing/operation/control/information (for example, a random access procedure/PRACH transmission without RAR monitoring) regarding at least one of the embodiments described above.
- Supporting of determination of a success/failure of PRACH transmission based on a PDCCH order.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of a random access procedure/PRACH transmission without RAR monitoring, any RRC parameter for a specific release (for example, Rel. 18/19), or the like.

When the UE does not support at least one of the specific UE capabilities above or is not configured with the specific information, operation of Rel. 15/16 may be applied, for example.

### (Supplementary Notes)

Regarding one embodiment of the present disclosure, the following supplementary notes of the invention will be given.

### {Supplementary Note 1-1}

A terminal including: a receiving section that receives a first downlink control channel (PDCCH) order; a transmitting section that transmits a random access channel (PRACH), based on the first PDCCH order; and a control section that controls, when a random access procedure without monitoring of a response signal (RAR) of the PRACH is configured, at least one of determination of a success or a failure of the PRACH and retransmission of the PRACH, based on whether or not a second PDCCH order or transmission confirmation information is received in certain duration.

### {Supplementary Note 1-2}

The terminal according to supplementary note 1-1, wherein the second PDCCH order indicates at least one of a same cell index, a same synchronization signal block index, and a same RACH parameter as the first PDCCH order.

### {Supplementary Note 1-3}

The terminal according to supplementary note 1-1 or 1-2, wherein the second PDCCH order indicates a RACH occasion different from the first PDCCH order.

### {Supplementary Note 1-4}

The terminal according to any one of supplementary notes 1-1 to 1-3, wherein the transmission confirmation information is indicated using at least one of a reserved bit, a random access preamble index field, and a PRACH mask index field included in a certain downlink control information format.

### {Supplementary Note 2-1}

A terminal including: a receiving section that receives a first downlink control channel (PDCCH) order; a transmitting section that transmits a random access channel (PRACH), based on the first PDCCH order; and a control section that determines that, when a random access procedure without monitoring of a response signal (RAR) of the PRACH is configured, transmission of the PRACH has completed or has succeeded, based on the transmission of the PRACH.

### {Supplementary Note 2-2}

The terminal according to supplementary note 2-1, wherein when a second PDCCH order is received after the PRACH transmission, the control section controls not to apply power ramping to the PRACH triggered by the second PDCCH order.

### {Supplementary Note 2-3}

A terminal including: a receiving section that receives a first downlink control channel (PDCCH) order; a transmitting section that transmits a random access channel (PRACH), based on the first PDCCH order; and a control section that determines that a random access procedure without monitoring of a response signal (RAR) of the PRACH is configured, and transmission of the PRACH has not completed or has not succeeded before a certain timing after the transmission of the PRACH.

### {Supplementary Note 2-4}

The terminal according to supplementary note 2-3, wherein when a second PDCCH order is received before the certain timing, the control section determines whether or not to apply power ramping to the PRACH triggered by the second PDCCH order, based on a reference signal associated with the PRACH triggered by the second PDCCH order.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

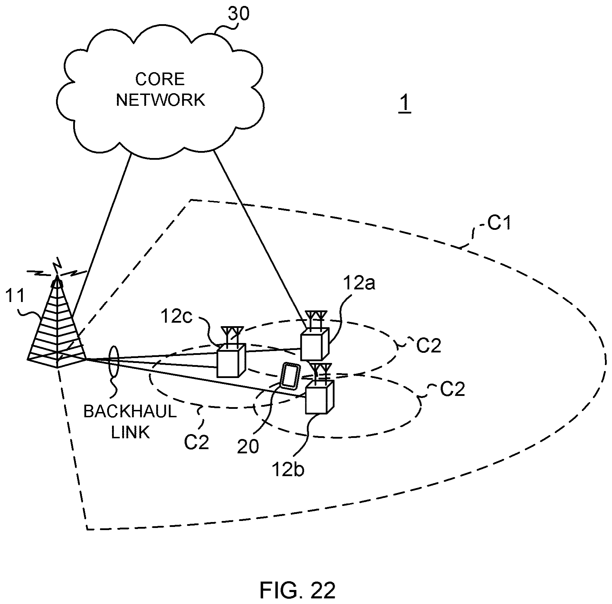

FIG. 22 is a diagram to show an example of a schematic structure of the radio communication system according to one embodiment. The radio communication system 1 (which may be referred to simply as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as User Plane Function (UPF), Access and Mobility management Function (AMF), Session Management Function (SMF), Unified Data Management (UDM), Application Function (AF), Data Network (DN), Location Management Function (LMF), and operation, administration and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

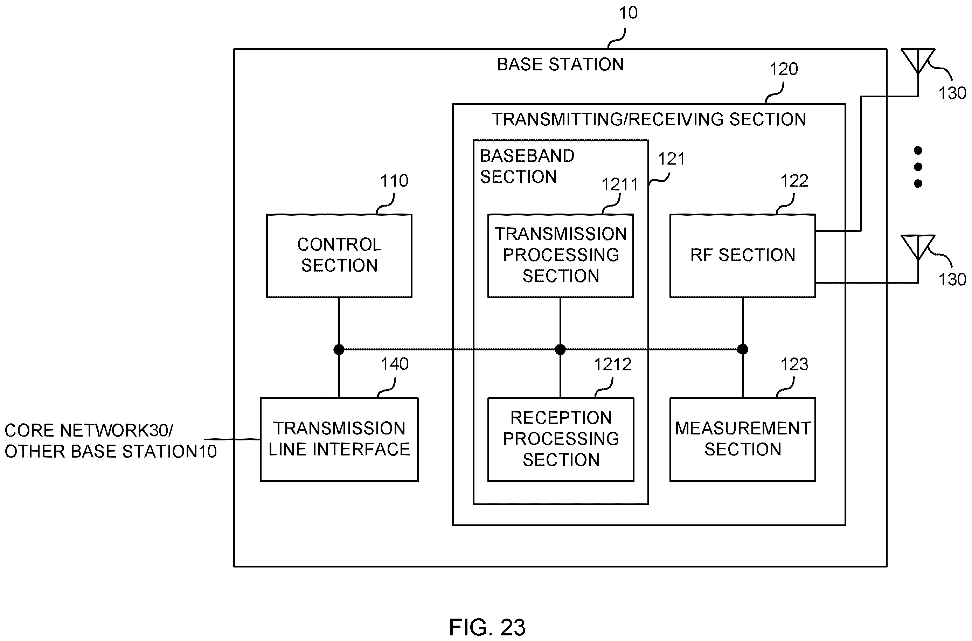

FIG. 23 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node that provides an NF) included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a first downlink control channel (PDCCH) order used as a trigger for a random access channel (PRACH).

The control section 110 may indicate, when a random access procedure without monitoring of a response signal (RAR) of the PRACH is configured, at least one of a success or a failure of the PRACH and retransmission of the PRACH, based on whether or not a second PDCCH order or transmission confirmation information is received in certain duration.

### (User Terminal)

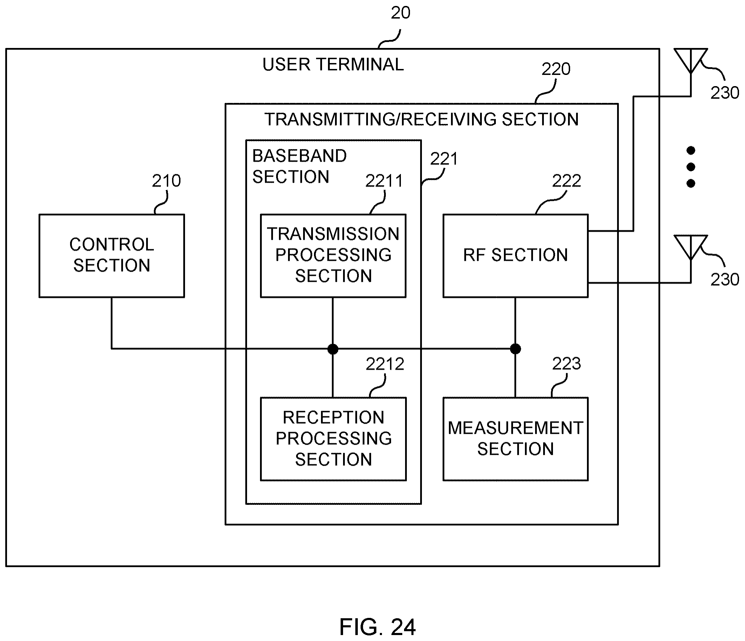

FIG. 24 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI computation, based on resources for channel measurement. The resources for channel measurement may be non zero power (NZP) CSI-RS resources, for example. The measurement section 223 may derive interference measurement for CSI computation, based on resources for interference measurement. The resources for interference measurement may be at least one of NZP CSI-RS resources for interference measurement, CSI-interference measurement (IM) resources, and the like. Note that CSI-IM may be referred to as CSI-interference management (IM), or may be interchangeably interpreted as a zero power (ZP) CSI-RS. Note that, in the present disclosure, a CSI-RS, an NZP CSI-RS, a ZP CSI-RS, CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a first downlink control channel (PDCCH) order. The transmitting/receiving section 220 may transmit a random access channel (PRACH), based on the first PDCCH order.

The control section 210 may control, when a random access procedure without monitoring of a response signal (RAR) of the PRACH is configured, at least one of determination of a success or a failure of the PRACH and retransmission of the PRACH, based on whether or not a second PDCCH order or transmission confirmation information is received in certain duration.

The second PDCCH order may indicate at least one of a same cell index, a same synchronization signal block index, and a same RACH parameter as the first PDCCH order. Alternatively, the second PDCCH order may indicate a RACH occasion different from the first PDCCH order. The transmission confirmation information may be indicated using at least one of a reserved bit, a random access preamble index field, and a PRACH mask index field included in a certain downlink control information format.

The control section 210 may determine that, when a random access procedure without monitoring of a response signal (RAR) of the PRACH is configured, transmission of the PRACH has completed or has succeeded, based on the transmission of the PRACH. When a second PDCCH order is received after the PRACH transmission, the control section 210 may control not to apply power ramping to the PRACH triggered by the second PDCCH order.

The control section 210 may determine that a random access procedure without monitoring of a response signal (RAR) of the PRACH is configured, and transmission of the PRACH has not completed or has not succeeded before a certain timing after the transmission of the PRACH. When a second PDCCH order is received before the certain timing, the control section 210 may determine whether or not to apply power ramping to the PRACH triggered by the second PDCCH order, based on a reference signal associated with the PRACH triggered by the second PDCCH order.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

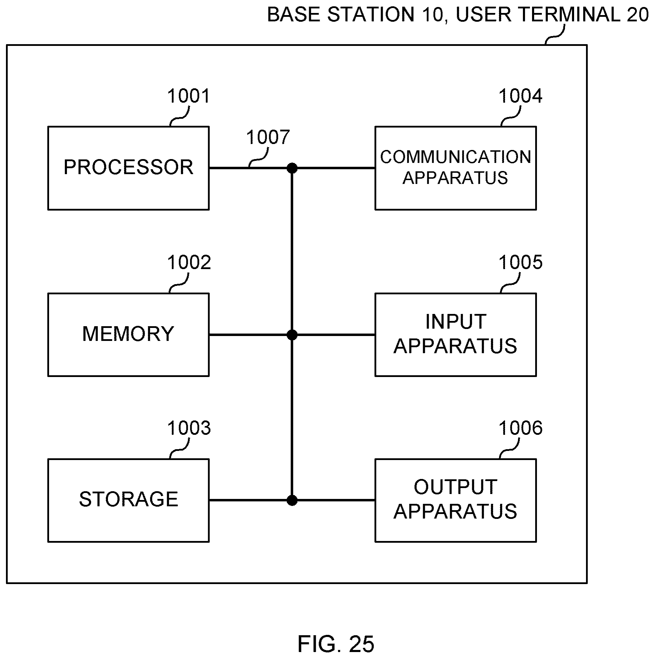

For example, a base station, a user terminal, and so on according to one embodiment of the present disclosure may function as a computer that executes the processes of the radio communication method of the present disclosure. FIG. 25 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station" a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit" "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

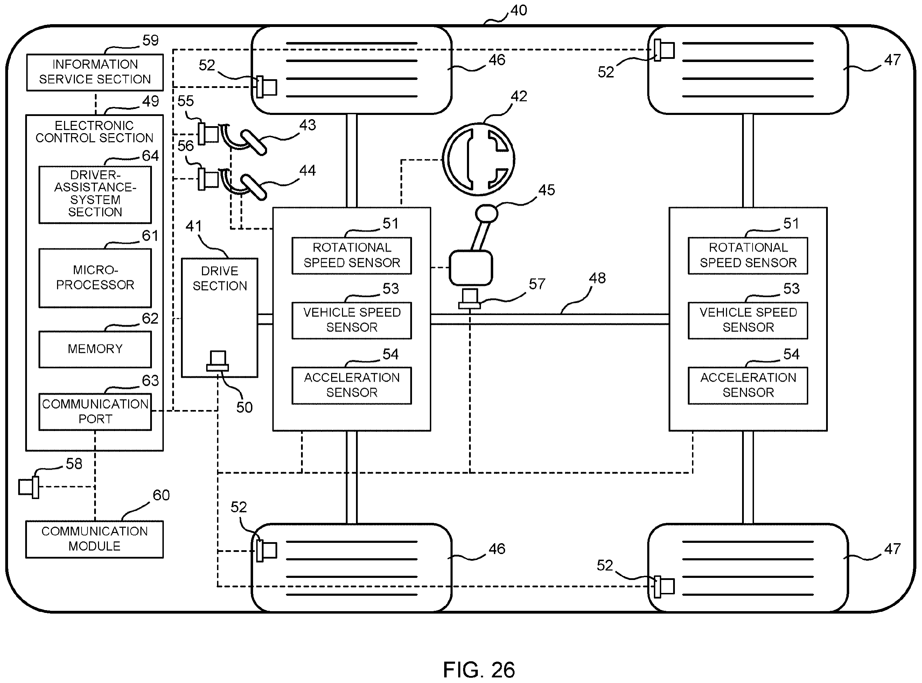

FIG. 26 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives a first downlink control channel (PDCCH) order;
a transmitting section that transmits a random access channel (PRACH), based on the first PDCCH order; and
a control section that controls, when a random access procedure without monitoring of a response signal (RAR) of the PRACH is configured, at least one of determination of a success or a failure of the PRACH and retransmission of the PRACH, based on whether or not a second PDCCH order or transmission confirmation information is received in certain duration.

2. The terminal according to claim 1, wherein
the second PDCCH order indicates at least one of a same cell index, a same synchronization signal block index, and a same RACH parameter as the first PDCCH order.

3. The terminal according to claim 1, wherein
the second PDCCH order indicates a RACH occasion different from the first PDCCH order.

4. The terminal according to claim 1, wherein
the transmission confirmation information is indicated using at least one of a reserved bit, a random access preamble index field, and a PRACH mask index field included in a certain downlink control information format.

5. A radio communication method for a terminal, the radio communication method comprising:
receiving a first downlink control channel (PDCCH) order;
transmitting a random access channel (PRACH), based on the first PDCCH order; and
controlling, when a random access procedure without monitoring of a response signal (RAR) of the PRACH is configured, at least one of determination of a success or a failure of the PRACH and retransmission of the PRACH, based on whether or not a second PDCCH order or transmission confirmation information is received in certain duration.

6. A base station comprising:
a transmitting section that transmits a first downlink control channel (PDCCH) order used as a trigger for a random access channel (PRACH); and
a control section that indicates, when a random access procedure without monitoring of a response signal (RAR) of the PRACH is configured, at least one of a success or a failure of the PRACH and retransmission of the PRACH, based on whether or not a second PDCCH order or transmission confirmation information is received in certain duration.
